# EUROPÄISCHE PATENTSCHRIFT

(11) **EP 2 376 319 B1**
(45) Veröffentlichungstag und Bekanntmachung des Hinweises auf die Patenterteilung: **26.09.2012**
(21) Anmeldenummer: 09771716.9
(22) Anmeldetag: 04.12.2009
(51) Int. Cl.: B60T 17/08

(54) **FEDERSPEICHERBREMSZYLINDER MIT EINER EINEN FÜHRUNGSRING MIT RADIAL ÄUSSEREN AUSNEHMUNGEN BEINHALTENDEN DICHTUNGSANORDNUNG**
SPRING BRAKE CYLINDER COMPRISING A SEALING ASSEMBLY THAT CONTAINS A GUIDE RING WITH OUTER RADIAL RECESSES
CYLINDRE DE FREIN À RESSORT ACCUMULATEUR POURVU D'UN ENSEMBLE D'ÉTANCHÉITÉ CONTENANT UNE BAGUE DE GUIDAGE À ÉVIDEMENT EXTÉRIEURS RADIAUX

(30) Priorität: 10.12.2008 DE 102008061354
(43) Veröffentlichungstag der Anmeldung: 19.10.2011
(73) Patentinhaber: Knorr-Bremse Systeme für Nutzfahrzeuge GmbH, 80809 München (DE)
(72) Erfinder: DEROUAULT, Sylvain, F-14100 Hermival les Vaux (FR); MARTIN, Vincent, F-14100 Les Monceaux (FR)
(74) Vertreter: Mattusch, Gundula
(86) Internationale Anmeldenummer: PCT/EP2009/008662
(87) Internationale Veröffentlichungsnummer: WO 2010/066378

(56) Entgegenhaltungen:
- DE-A1-102006 005 031
- GB-A- 1 288 061
- US-A- 4 116 114
- US-A- 4 221 158

## Beschreibung

### Stand der Technik

Die Erfindung geht aus einem Federspeicherbremszylinder für Bremsanlagen von Fahrzeugen, mit einem im Gehäuse des Federspeicherbremszylinders angeordneten, durch wenigstens eine Speicherfeder betätigbaren Federspeicherbremskolben, wobei der Federspeicherbremskolben an seiner radial äußeren Umfangsfläche eine Dichtungsanordnung trägt, zur Abdichtung einer die Speicherfeder beinhaltenden Federkammer gegenüber einer be- und entlüftbaren Federspeicherbremskammer des Federspeicherbremszylinders und die Dichtungsanordnung einen den Federspeicherbremskolben gegenüber einer Lauffläche des Federspeicherbremszylinders mit seiner radial äußeren Arbeitsfläche führenden Führungsring und wenigstens ein mit seinem Dichtungsabschnitt gegen die Lauffläche des Federspeicherbremszylinders dichtendes Dichtungselement aufweist, wobei die Arbeitsfläche des Führungsrings dem Dichtungsabschnitt des Dichtungselements in Strömungsrichtung von der Federkammer in die Federspeicherbremskammer gesehen vorgeordnet ist und der Führungsring aus einem gegenüber dem Material des wenigstens einen Dichtungselements steiferen Material besteht, gemäß dem Oberbegriff von Anspruch 1, hervor.

Aus dem Stand der Technik, beispielsweise aus der EP 0 740 085 B1 sind kombinierte Betriebsbrems- und Federspeicherbremskolben sog. Kombizylinder bekannt, bei welchen der Federspeicherbremskolben im Parkbremsfall mit seiner Federspeicherbremskolbenstange den Betriebsbremskolben betätigt, welcher wiederum eine Betriebsbremskolbenstange aufweist, welche mit einem Bremsmechanismus der Fahrzeugbremse, insbesondere einer Scheibenbremse zusammen wirkt. Ein solcher Bremsmechanismus weist beispielsweise einen mit der Betriebsbremskolbenstange gelenkig verbundenen Schwenkhebel auf, welcher mit einer Zuspannwelle drehfest verbunden ist, die mit einer Nockenkontur versehen ist, die bei einem Verdrehen der Zuspannwelle um ihre Längsachse zu einer axialen Relativbewegung eines Bremssattels und einer Bremsbacke einer Scheibenbremse führt. Da sich der mit der Betriebsbremskolbenstange gelenkig verbundene Schwenkhebel während dieser Bewegung um die Zuspannwelle dreht, wird auf die Betriebsbremskolbenstange und damit auf den Betriebsbremskolben ein Kippmoment um eine Achse senkrecht zur Längsachse ausgeübt. Weil sich im Parkbremsfall die relativ große Stirnfläche der Federspeicherbremskolbenstange am Betriebsbremskolben flächig abstützt, wird dieses Kippmoment daher auch zumindest teilweise auf die Federspeicherbremskolbenstange und auf den Federspeicherbremskolben übertragen. Da der Federspeicherbremskolben durch die Dichtungsanordnung gegenüber dem Federspeicherbremszylinder geführt ist, wirkt dieses Kippmoment zumindest teilweise auch auf die Dichtungsanordnung, was auf Dauer zu einer Beschädigung der Dichtungsanordnung und damit zu einem Nachlassen der Dichtwirkung führen kann.

Eine gattungsgemäßer Federspeicherbremszylinder ist aus der DE 10 2008 0476 33 A1 bekannt. Dort beinhaltet die Dichtungsanordnung einen den Federspeicherbremskolben entlang einer Lauffläche des Federspeicherbremszylinders führenden Führungsring aus einem gegenüber dem Material wenigstens eines Dichtungselements steiferen Material, wobei das Dichtungselement aus einem mit dem Führungsring durch Urformen wie Spritzgießen oder Spritzpressen verbundenen Elastomer besteht. Dann kann das Material des Führungsrings so steif gewählt werden, dass er das auf den Federspeicherbremskolben wirkende Kippmoment dauerhaft ohne Schaden abstützen und in den Federspeicherbremszylinder ableiten kann, während das Material des wenigstens einen Dichtungselements so elastisch gewählt werden kann, dass es günstige Dichtungseigenschaften aufweist und insbesondere im wesentlichen keine Führungsfunktion ausüben muss. Dann können auch die Toleranzen zwischen dem Führungsring und der Lauffläche des Federspeicherbremskolbens relativ groß gewählt werden, da der Führungsring im wesentlichen keine Dichtungsfunktion zu erfüllen hat, was sich günstig auf die Fertigungskosten auswirkt. Zum ändern steigt auch die Haltbarkeit der Dichtungsanordnung, weil das wenigstens eine, die Dichtungsfunktion übernehmende Dichtungselement so elastisch ausgeführt werden kann, dass sich das Kippmoment nicht mehr negativ auf seine Lebensdauer auswirkt.

Ein kombinierter Betriebsbrems- und Federspeicherbremszylinder mit einem Federspeicherbremszylinder ist weiterhin aus der DE 40 11 739 A1 bekannt. Der Federspeicherbremskolben weist eine Kolbenstange auf, welche ein Entlüftungsventil trägt, das eine Strömungsverbindung zwischen der Federkammer und der Betriebsbremskammer herstellt oder sperrt. Das Entlüftungsventil ist dort endseitig im hohlen Kolbenrohr des Federspeicherbremskolbens angeordnet, welcher abhängig vom Betriebszustand in die Betriebsbremskammer hineinragen kann. Das Entlüftungsventil hat die Aufgabe, beim Lösen der Feststellbremse den durch das Zurückfahren des Federspeicherbremskolbens und dadurch sich verkleinernde Volumen der Federkammer dort entstehenden Überdruck abzubauen, indem es durch diesen in Öffnungsstellung geschaltet wird und eine Strömungsverbindung zwischen der Federkammer und der Betriebsbremskammer herstellt. Beim Anfahren auf einer ebenen Fahrstrecke ist die Betriebsbremskammer entlüftet und steht mit einer Entlüftung eines Druckregelmoduls in Verbindung, da eine Betriebsbremsung nach dem Lösen der Feststellbremse nicht notwendig ist. Dann kann zumindest ein Teil des in der Federkammer überschüssigen Luftvolumens ausströmen, welche folglich von dort nicht direkt in die Atmosphäre gelangt, z.B. über ein in der Wandung des Federkammer angeordnetes Ventil, sondern über den Be- und Entlüftungsweg der Betriebsbremskammer. Deshalb spricht man in diesem Zusammenhang auch von innerer Entlüftung.

Beim Anfahren an einer ansteigenden Fahrstrecke ist es jedoch bei zunächst zugespannter Feststellbremse notwendig, vor dem Lösen der Feststellbremse wenigstens kurzzeitig zusätzlich die Betriebsbremse zuzuspannen, um ein Zurückrollen des Fahrzeugs beim Anfahren zu verhindern. In diesem Fall wird die Betriebsbremskammer belüftet. Bei ausreichend hoher Bremsanforderung durch den Fahrer vermag der in der Betriebsbremskammer und zugleich an der einen Seite des Kolbens anstehende Betriebsbremsdruck diesen gegen die Wirkung des sich in der Federkammer aufbauenden Drucks am Ventilsitz und dadurch das Entlüftungsventil geschlossen zu halten. Befinden sich allerdings aufgrund einer entsprechend geringen Betriebsbremsanforderung des Fahrers der Betriebsbremsdruck und/oder der Betriebsbremsdruckgradient unterhalb gewisser Schwellwerte, so reicht der an der einen Seite des Kolbens anstehende Betriebsbremsdruck nicht aus, um das Entlüftungsventil geschlossen zu halten. Dann strömt Druckluft von der Betriebsbremskammer über das geöffnete Entlüftungsventil in die Federkammer. Von dort wird sie durch den Dichtspalt zwischen der Arbeitsfläche der Federspeicherbremskolbendichtung und der Lauffläche des Federspeicherzylinders sowie die Gehäusedichtung in die Atmosphäre gepresst, was störende Pfeifgeräusche verursacht.

Die DE 10 2006 005 031 A1 schlägt zur Lösung des Problems der störenden, auf Luftströmungen basierenden Geräusche vor, eine Arbeitsfläche der am radial äußeren Umfang des Federspeicherbremskolbens angeordneten Elsatomerdichtung mit wenigstens einer radial Ausnehmung zu versehen. Diese radialen Ausnehmungen sind als axiale Nuten ausgebildet und als Sacklöcher zur Federkammer hin geöffnet und zur Federspeicherbremskammer hin geschlossen. Unter den eingangs genannten Betriebsbedingungen kann dann Druckluft von der Federkammer zunächst in die Ausnehmungen der Elastomerdichtung und dann an einer Dichtlippe der Elastomerdichtung vorbei in die Federspeicherbremskammer entweichen. Es hat sich herausgestellt, dass die störenden Pfeifgeräusche durch diese Maßnahme zwar reduziert, jedoch nicht auf ein akzeptables Maß gebracht werden konnten.

Der vorliegenden Erfindung liegt demgegenüber die Aufgabe zugrunde, einen Federspeicherbremszylinder der eingangs erwähnten Art derart weiter zu entwickeln, dass die in bestimmten Betriebssituationen auftretenden, auf Luftströmungen zurückzuführenden Geräusche noch weiter reduziert oder vermieden werden.

Diese Aufgabe wird erfindungsgemäß durch die Merkmale von Anspruch 1 gelöst.

### Offenbarung der Erfindung

Die Anmelderin hat herausgefunden, dass für den Fall, dass der Führungsring an seiner radial äußeren Arbeitsfläche mit wenigstens einer sich in axialer Richtung erstreckenden, eine Strömungsverbindung zwischen der zur Federkammer weisenden Stirnfläche des Führungsrings und der zum Dichtungsabschnitt des Dichtungselements weisenden Stirnfläche des Führungsrings schaffenden radial äußeren Ausnehmung versehen ist, die störenden Strömungsgeräusche gegenüber der in DE 10 2006 005 031 A1 vorgeschlagenen Lösung noch weiter reduziert werden können. Gegenüber dem zuletzt genannten Stand der Technik wurden daher die radial äußeren Ausnehmungen vom Dichtungselement in einen dort nicht verwendeten Führungsring aus steiferem Material verlegt.

Der Grund dafür liegt darin, dass der mit den Ausnehmungen versehene Führungsring eine höhere Steifigkeit als das insbesondere aus Elastomer bestehende Dichtungselement aufweist und dadurch insbesondere die Amplituden des von der Luftströmung zu Schwingungen angeregten Führungsrings reduziert werden, was wiederum in einer geringeren Geräuschentwicklung resultiert. Durch Passieren der Ausnehmungen wird weiterhin, wie bei einer Spaltdichtung durch Reibungsvorgänge und Totlaufen der Luftschwingungen der Luftdruck reduziert, so dass die dann den Führungsring passierte Luftströmung den Dichtungsabschnitt des nachgiebigeren Dichtungselements weniger zu Schwingungen anzuregen vermag.

Weiterhin ist der Spalt zwischen der radial äußeren Arbeitsfläche des Führungsrings und der Lauffläche des Federspeicherbremskolbens ohnehin relativ groß, weil der Führungsring keine Dichtfunktion, sondern lediglich eine Führungsfunktion ausübt, so dass der Strömungsquerschnitt insbesondere im Bereich der radial äußeren Ausnehmung des Führungsrings noch weiter vergrößert ist. Infolgedessen verursacht die Dichtungsanordnung weniger störende hochfrequente Pfeifgeräusche.

Durch die in den Unteransprüchen aufgeführten Maßnahmen sind vorteilhafte Weiterbildungen und Verbesserungen der in den unabhängigen Ansprüchen angegebenen Erfindung möglich.

Wenn der Führungsring an seiner radial äußeren Arbeitsfläche weiterhin wenigstens eine Kavität zur Aufnahme von Schmierstoff aufweist, wird die Reibung zwischen dem Federspeicherbremskolben und der Lauffläche des Federspeicherbremszylinders vorteilhaft reduziert.

Besonders bevorzugt sind mehrere Ausnehmungen und mehrere Kavitäten an der radial äußeren Umfangsfläche des Führungsrings im wesentlichen gleich verteilt und abwechselnd angeordnet.

Gemäß einer besonders zu bevorzugenden Maßnahme ist vorgesehen, dass
a) die radial äußere Umfangsfläche eines Kolbenhemds des Federspeicherbremskolbens einen wenigstens teilweise umlaufenden Vorsprung aufweist,
b) das Dichtungselement an einem dem Dichtungsabschnitt in Strömungsrichtung von der Federkammer in die Federspeicherbremskammer gesehen vorgeordneten Lagerabschnitt eine radial äußere, wenigstens teilweise umlaufende Ausnehmung aufweist,
c) der Führungsring derart radial elastisch aufweitbar ist, dass er unter radial elastischer Aufweitung und anschließender Rückfederung
d) mit einem Lagerabschnitt in eine radial äußere Ausnehmung am Kolbenhemd des Federspeicherbremskolbens eingreift und
e) mit einem die zum Dichtungsabschnitt des Dichtungselements weisende Stirnfläche beinhaltenden Halteabschnitt wenigstens den Vorsprung des Kolbenhemds axial übergreifend und in die Ausnehmung des Lagerabschnitts des Dichtungselements radial eingreifend das Dichtungselement am Kolbenhemd des Federspeicherbremskolbens hält. Demzufolge braucht zur Montage der Dichtungsanordnung lediglich das Dichtungselement am Kolbenhemd des Federspeicherbremskolbens positioniert und dann der Führungsring unter elastischer Aufweitung und anschließender Rückfederung aufgesetzt werden, wodurch der Führungsring das Dichtungselement am Federspeicherbremskolben lagert und auch selbst dort fixiert ist.

Der Führungsring besteht dabei bevorzugt aus einem Kunststoff wie aus Acetal und das Dichtungselement aus einem Elastomer.

Gemäß einer Weiterbildung kann vorgesehen sein, dass der wenigstens eine Dichtungsabschnitt des Dichtungselements an seinem vom Führungsring weg weisenden Ende einen schwalbenschwanzförmigen Querschnitt mit zwei Schenkeln aufweist, wobei der eine Schenkel gegen die radial innere Wandung der zentralen Bohrung der Zwischenwand oder gegen den Federspeicherbremszylinder und der andere Schenkel gegen die Federspeicherbremskolbenstange oder gegen den Federspeicherbremskolben dichtet. Damit ergibt sich eine sehr elastische, an die Oberfläche des Gleitpartners leicht anpassbare Dichtung.

Besonders bevorzugt ist der Federspeicherbremszylinder mit einem Betriebsbremszylinder zu einem kombinierten Betriebsbrems- und Federspeicherbremszylinder zusammengefasst und der Betriebsbremszylinder weist einen im Gehäuse des Betriebsbremszylinders angeordneten Betriebsbremskolben auf.

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine Querschnittsdarstellung eines Kombizylinders mit einer Dichtungsanordnung gemäß einer bevorzugten Ausführungsform der Erfindung;
- Fig.2: eine perspektivische Schnittdarstellung eines Federspeicherbremskolbens des Kombizylinders mit der Dichtungsanordnung von Fig.1;
- Fig.3: Fig.2 eine Querschnittsdarstellung der Dichtungsanordnung von Fig.1.

### Beschreibung des Ausführungsbeispiels

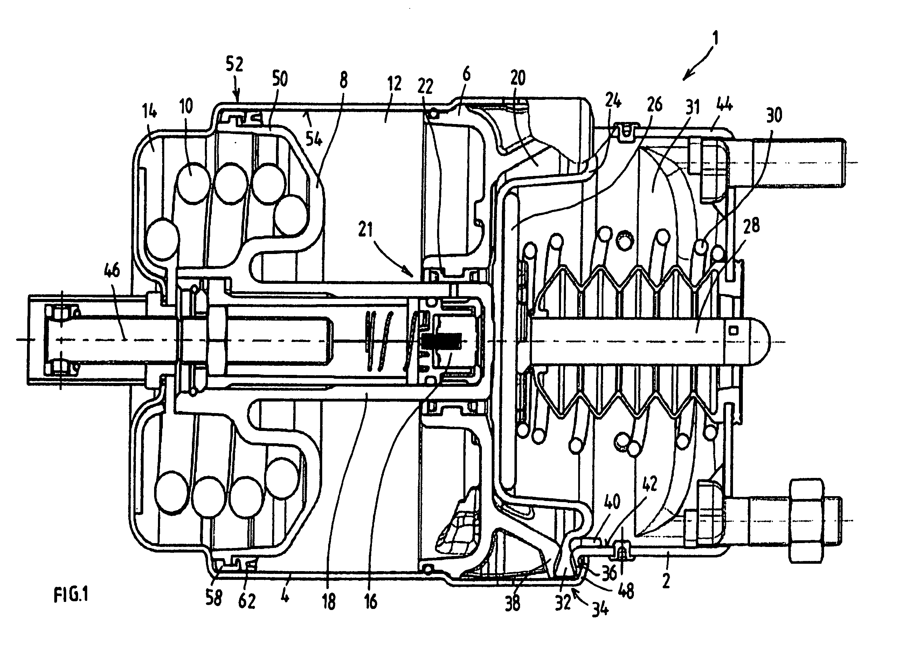

In Fig.1 ist ein kombinierter Betriebsbrems- und Federspeicherbremszylinder 1, nachfolgend Kombizylinder genannt, dargestellt. Der Kombizylinder 1 besteht aus einem Betriebsbremszylinder 2 und aus einem mit diesem baulich und funktionell verbundenen Federspeicherbremszylinder 4. Der Betriebsbremszylinder 2 und der Federspeicherbremszylinder 4 sind durch eine Zwischenwand 6 voneinander getrennt. Innerhalb des Federspeicherbremszylinders 4 ist ein Federspeicherbremskolben 8 verschiebbar angeordnet, wobei an einer Seite des Federspeicherbremskolbens 8 eine Speicherfeder 10 anliegt. Die Speicherfeder 10 stützt sich an ihrer entgegen gesetzten Seite am Boden des Federspeicherbremszylinders 4 ab. Zwischen dem Federspeicherbremskolben 8 und der Zwischenwand 6 ist eine Federspeicherbremskammer 12 ausgebildet, welche mit einem aus Maßstabsgründen nicht gezeigten Druckregelmodul in Verbindung steht, um diese zu belüften und zu entlüften. Bei Belüftung wird der Federspeicherbremskolben 8 unter Verspannung der Speicherfeder 10 axial in Lösestellung der Feststellbremse verschoben. Bei dieser Verschiebung des Federspeicherbremskolbens 8 wird die Luft, welche innerhalb der die Speicherfeder 10 aufnehmenden Federkammer 14 ansteht, über ein Entlüftungsventil 16 herausgedrückt. Wird dagegen zum Zwecke der Abbremsung die Federspeicherbremskammer 12 entlüftet, dann vermag die Speicherfeder 10 den Federspeicherbremskolben 8 in Zuspannstellung zu verschieben.

Der Federspeicherbremskolben 8 ist mit einer hohlen Federspeicherbremskolbenstange 18 verbunden, welche sich durch die Zwischenwand 6 in eine Betriebsbremskammer 20 des Betriebsbremszylinders 2 erstreckt. Eine in eine zentrale Bohrung 21 der Zwischenwand 6 eingesetzte Dichtungsanordnung 22 dichtet gegenüber der Außenwand der Federspeicherbremskolbenstange 18 während deren Längsbewegung ab. In die Betriebsbremskammer 20 mündet ein nicht gezeigter Einlass, über welchen zum Betätigen des Betriebsbremszylinders 2 Druckluft eingelassen und abgelassen wird. Die Druckluft wirkt auf eine innerhalb des Betriebsbremszylinders 2 eingesetzte Membrane 24 ein, an deren entgegen gesetzter Seite ein Druckstück in Form eines steifen Membrantellers 26 vorgesehen ist. Genauer trennt die Membrane 24 die mit Druckmittel be- und entlastbare Betriebsbremskammer 20 des Betriebsbremszylinders 2 von einer eine am Membranteller 26 abgestützte Rückholfeder 30 aufnehmende Federkammer 31.

Der Membranteller 26 ist mit einer Druckstange 28 verbunden, die mit einem Bremsbetätigungsmechanismus außerhalb des Kombizylinders 1 zusammenwirkt. Hierbei kann es sich beispielsweise um Betätigungselemente einer Scheibenbremse eines Kraftfahrzeugs handeln. Der Betriebsbremszylinder 2 ist ein aktiver Bremszylinder, d.h. dass die Betriebsbremse durch Belüften der Betriebsbremskammer 20 zugespannt und durch Entlüften gelöst wird. Die sich einerseits am Membranteller 26 und andererseits am Boden des Betriebsbremszylinders 2 abstützende Rückholfeder 30 sorgt dafür, dass die Druckstange 28 bei entlüfteter Betriebsbremskammer 20 in die Lösestellung zurückgeholt wird.

Ein radial äußerer Befestigungsrand 32 der Membrane 24 weist einen keilförmigen, sich nach radial innen hin verjüngenden Querschnitt auf. Dieser radial äußere Befestigungsrand 32 der Membrane 24 mit dem keilförmigen, sich nach radial innen verjüngenden Querschnitt ist in eine komplementär geformte Aufnahme 34 mit keilförmigem, sich nach radial außen erweiternden Querschnitt zwischen der Zwischenwand 6 und dem Betriebsbremszylinder 2 geklemmt. Die Zwischenwand 6 und der Betriebsbremszylinder 2 bilden ihre äußeren Ränder als nach radial außen abgebogene Flansche 36, 38 aus, deren gegeneinander weisende Innenflächen die Aufnahme 34 mit keilförmigem Querschnitt zwischen sich ausbilden.

Weiterhin ist an der Membrane 24 wenigstens ein sich in axialer Richtung erstreckender, in Bezug zum Befestigungsrand 32 nach radial innen versetzt angeordneter Zentrierring 40 ausgebildet, durch welchen sie gegen eine radial innere Umfangsfläche 42 einer Wandung 44 des Betriebsbremszylinders 2 zentrierbar ist. Besonders bevorzugt ist der Zentrierring 40 im wesentlichen senkrecht zu einer Mittelebene des Befestigungsrandes 32 angeordnet und ragt beispielsweise einseitig von der Membrane 24 weg. Denkbar ist allerdings auch, dass anstatt dieses einen Zentrierrings 40 oder zusätzlich ein weiterer, in Richtung des Federspeicherbremszylinders 4 ragender und gegen die radial innere Umfangsfläche dessen Wandung zentrierender Zentrierring vorgesehen ist.

Nicht zuletzt liegt die radial innere Umfangsfläche 42 des Betriebsbremszylinders 2, gegen welche der Zentrierring 40 zentriert, bevorzugt auf einem gedachten Zylinder, dessen Mittelachse koaxial zur Zylinderachse 46 ist. Der Zentrierring 40 kann wie gezeigt in Umfangsrichtung gesehen vollständig umlaufend oder aus Ringabschnitten bestehend ausgebildet sein. Die Membrane 24 ist bevorzugt aus Gummi gefertigt und der Zentrierring 40 mit ihr einstückig ausgebildet.

Dann sorgt eine eine axiale Komponente aufweisende Klemmkraft der gegeneinander geklemmten Zwischenwand 6 und Betriebsbremszylinder 2 dafür, dass der Zentrierring 40 der Membrane 24 gegen die radial innere Umfangsfläche 42 der Wandung 44 des Betriebsbremszylinders 2 gepresst wird. Mit anderen Worten sorgt die axiale Komponente der Klemmkraft dafür, dass der Befestigungsrand 32 aufgrund der Keilwirkung nach radial außen gezogen und dadurch der Zentrierring 40 mit höherer radialer Kraft gegen die radial innere Umfangsfläche 42 der Wandung 44 des Betriebsbremszylinders 2 im Sinne einer Selbstverstärkung der Zentrierung gepresst wird.

Realisierbar ist eine solche axiale Klemmkraftkomponente beispielsweise dadurch, dass der einen Flansch 36 ausbildende Rand des Betriebsbremszylinders 2 sowie der Flansch 38 der Zwischenwand 6 von einem Rand 48 der Wandung des Federspeicherbremszylinders 4 nach Art einer Bördelung übergriffen werden, welche beispielsweise durch einen Umformprozess hergestellt wird. Diese Bördelung sorgt dann für die axiale Komponente der Klemmkraft.

Der Federspeicherbremskolben 8 trägt an seiner radial äußeren Umfangsfläche, genauer an seinem Kolbenhemd 50 eine Dichtungsanordnung 52, zur Abdichtung der die Speicherfeder 10 beinhaltenden Federkammer 14 gegenüber der be- und entlüftbaren Federspeicherbremskammer 12 des Federspeicherbremszylinders 4. Die Dichtungsanordnung 52 weist einen den Federspeicherbremskolben 8 gegenüber einer Lauffläche 54 des Federspeicherbremszylinders 4 mit seiner radial äußeren Arbeitsfläche 56 führenden Führungsring 58 und wenigstens ein mit seinem Dichtungsabschnitt 60 gegen die Lauffläche 54 des Federspeicherbremszylinders 4 dichtendes Dichtungselement 62, wobei die Arbeitsfläche 56 des Führungsrings 58 dem Dichtungsabschnitt 60 des Dichtungselements 62 in Strömungsrichtung von der Federkammer 14 in die Federspeicherbremskammer 12 gesehen vorgeordnet ist und der Führungsring 58 aus einem gegenüber dem Material des wenigstens einen Dichtungselements 62 steiferen Material besteht.

Während daher die Arbeitsfläche 56 des Führungsrings 58 den Federspeicherbremskolben 8 entlang der Lauffläche 54 des Federspeicherbremszylinders 4 führt, bildet das Dichtungselement 62 die zugeordnete Bewegungsdichtung.

Insbesondere besteht der Führungsring 58 aus einem steifen Kunststoff wie Acetal und das Dichtungselement 62 aus einem demgegenüber elastischeren Elastomer. Die Federspeicherbremskolbenstange 18, der Federspeicherbremskolben 8 und die Zwischenwand 6 bestehen bevorzugt aus Aluminium.

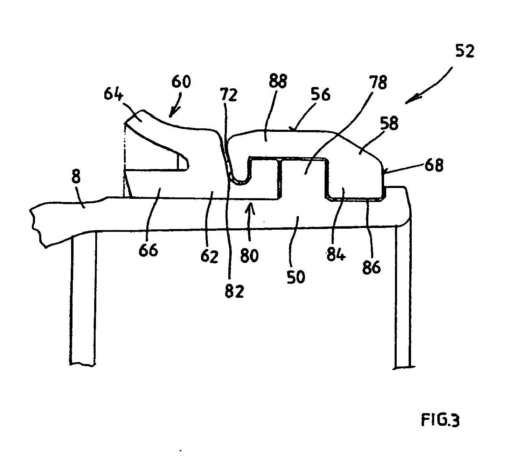

An der vom Führungsring 58 weg weisenden Seite des Dichtungselements 62 ragt der Dichtungsabschnitt 60 axial heraus, der an seinem vom Führungsring 58 weg weisenden Ende einen schwalbenschwanzförmigen Querschnitt aufweist, wie Fig.3 am besten zeigt. Dabei dichtet der eine Schenkel 64 gegen die Lauffläche 54 des Federspeicherbremszylinders 4 und der andere Schenkel 66 gegen das Kolbenhemd 50 des Federspeicherbremskolbens 8.

Der Führungsring 58 ist an seiner radial äußeren Arbeitsfläche 56, d.h. der Fläche, die den Federspeicherbremskolben 8 bzw. dessen Kolbenhemd 50 gegenüber der Lauffläche 54 des Federspeicherbremszylinders 4 führt, mit wenigstens einer sich in axialer Richtung erstreckenden, eine Strömungsverbindung zwischen der zur Federkammer 14 weisenden Stirnfläche 68 des Führungsrings 58 und der zum Dichtungsabschnitt 60 des Dichtungselements 62 weisenden Stirnfläche 72 des Führungsrings 58 schaffenden radial äußeren Ausnehmung 74 versehen, die störende Geräusche aufgrund von Luftströmungen zwischen der Federkammer 14 und der Federspeicherbremskammer 12 reduziert. Die Ausnehmung 74 ist bevorzugt als axiale Nut ausgebildet.

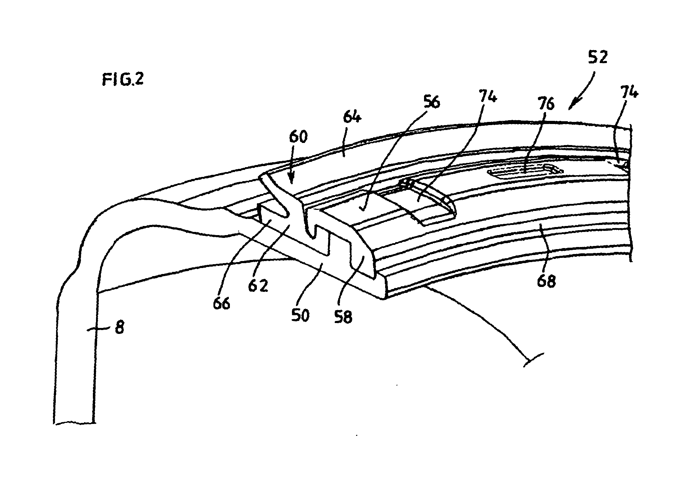

Weiterhin weist der Führungsring 58 an seiner radial äußeren Arbeitsfläche 56 wenigstens eine Kavität 76 zur Aufnahme von Schmierstoff auf. Dadurch wird die Reibung zwischen dem Federspeicherbremskolben 8 bzw. dem Führungsring 58 und der Lauffläche 54 des Federspeicherbremszylinders 4 vorteilhaft reduziert. Besonders bevorzugt sind mehrere Ausnehmungen 74 und mehrere Kavitäten 76 an der radial äußeren Arbeitsfläche 56 des Führungsrings 58 im wesentlichen gleich verteilt und abwechselnd angeordnet, wie insbesondere Fig.2 veranschaulicht.

### Insbesondere ist vorgesehen, dass

a) die radial äußere Umfangsfläche des Kolbenhemds 50 des Federspeicherbremskolbens 8 einen wenigstens teilweise umlaufenden Vorsprung 78 aufweist,
b) das Dichtungselement 62 an einem dem Dichtungsabschnitt 60 in Strömungsrichtung von der Federkammer 14 in die Federspeicherbremskammer 12 gesehen vorgeordneten Lagerabschnitt 80 eine radial äußere, wenigstens teilweise umlaufende Ausnehmung 82 aufweist,
c) der Führungsring 58 derart radial elastisch aufweitbar ist, dass er unter radial elastischer Aufweitung und anschließender Rückfederung
d) mit einem Lagerabschnitt 84 in eine radial äußere Ausnehmung 86 am Kolbenhemd 50 des Federspeicherbremskolbens 8 eingreift und
e) mit einem die zum Dichtungsabschnitt 60 des Dichtungselements 62 weisende Stirnfläche 72 beinhaltenden Halteabschnitt 88 wenigstens den Vorsprung 78 des Kolbenhemds axial übergreifend und in die Ausnehmung 82 des Lagerabschnitts 84 des Dichtungselements 62 radial eingreifend das Dichtungselement 62 am Kolbenhemd 50 des Federspeicherbremskolbens 8 hält.

### Bezugszeichenliste

- 1: Betriebsbrems- und Federspeicher
- 2: Betriebsbremszylinder
- 4: Federspeicherbremszylinder
- 6: Zwischenwand
- 8: Federspeicherbremskolben
- 10: Speicherfeder
- 12: Federspeicherbremskammer
- 14: Federkammer
- 16: Entlüftungsventil
- 18: Federspeicherbremskolbenstange
- 20: Betriebsbremskammer
- 21: Bohrung
- 22: Dichtungsanordnung
- 24: Membrane
- 26: Membranteller
- 28: Druckstange
- 30: Rückholfeder
- 31: Federkammer
- 32: Befestigungsrand
- 34: Aufnahme
- 36: Flansch
- 38: Flansch
- 40: Zentrierring
- 42: radial innere Umfangsfläche
- 44: Wandung
- 46: Zylinderachse
- 48: Rand
- 50: Kolbenhemd
- 52: Dichtungsanordnung
- 54: Lauffläche
- 56: Arbeitsfläche
- 58: Führungsring
- 60: Dichtungsabschnitt
- 62: Dichtungselement
- 64: Schenkel
- 66: Schenkel
- 68: Stirnfläche
- 72: Stirnfläche
- 74: Ausnehmung
- 76: Kavität
- 78: Vorsprung
- 80: Lagerabschnitt
- 82: Ausnehmung
- 84: Lagerabschnitt
- 86: Ausnehmung
- 88: Halteabschnitt

## Patentansprüche

1. Federspeicherbremszylinder (1) für Bremsanlagen von Fahrzeugen, mit einem im Gehäuse des Federspeicherbremszylinders (4) angeordneten, durch wenigstens eine Speicherfeder (10) betätigbaren Federspeicherbremskolben (8), wobei der Federspeicherbremskolben (8) an seiner radial äußeren Umfangsfläche eine Dichtungsanordnung (52) trägt, zur Abdichtung einer die Speicherfeder (10) beinhaltenden Federkammer (14) gegenüber einer be- und entlüftbaren Federspeicherbremskammer (12) des Federspeicherbremszylinders (4) und die Dichtungsanordnung (52) einen den Federspeicherbremskolben (8) gegenüber einer Lauffläche (54) des Federspeicherbremszylinders (4) mit seiner radial äußeren Arbeitsfläche (56) führenden Führungsring (58) und wenigstens ein mit seinem Dichtungsabschnitt (60) gegen die Lauffläche (54) des Federspeicherbremszylinders (4) dichtendes Dichtungselement (62) aufweist, wobei die Arbeitsfläche (56) des Führungsrings (58) dem Dichtungsabschnitt (60) des Dichtungselements (62) in Strömungsrichtung von der Federkammer (14) in die Federspeicherbremskammer (12) gesehen vorgeordnet ist und der Führungsring (58) aus einem gegenüber dem Material des wenigstens einen Dichtungselements (62) steiferen Material besteht, **dadurch gekennzeichnet, dass** der Führungsring (58) an seiner radial äußeren Arbeitsfläche (56) mit wenigstens einer sich in axialer Richtung erstreckenden, eine Strömungsverbindung zwischen der zur Federkammer (14) weisenden Stirnfläche (68) des Führungsrings (58) und der zum Dichtungsabschnitt (60) des Dichtungselements (62) weisenden Stirnfläche (72) des Führungsrings (58) schaffenden radial äußeren Ausnehmung (74) versehen ist.

2. Federspeicherbremszylinder nach Anspruch 1, **dadurch gekennzeichnet, dass** der Führungsring (58) an seiner radial äußeren Arbeitsfläche (56) weiterhin wenigstens eine Kavität (76) zur Aufnahme von Schmierstoff aufweist.

3. Federspeicherbremszylinder nach einem der vorhergehenden Ansprüche, **dadurch gekennzeichnet, dass** mehrere Ausnehmungen (74) und mehrere Kavitäten(76) an der radial äußeren Arbeitsfläche (56) des Führungsrings (58) im wesentlichen gleich verteilt und abwechselnd angeordnet sind.

4. Federspeicherbremszylinder nach einem der vorhergehenden Ansprüche, **dadurch gekennzeichnet, dass**
a) die radial äußere Umfangsfläche des Kolbenhemds (50) des Federspeicherbremskolbens (8) einen wenigstens teilweise umlaufenden Vorsprung (78) aufweist,
b) das Dichtungselement (62) an einem dem Dichtungsabschnitt (60) in Strömungsrichtung von der Federkammer (14) in die Federspeicherbremskammer (12) gesehen vorgeordneten Lagerabschnitt (80) eine radial äußere, wenigstens teilweise umlaufende Ausnehmung (82) aufweist,
c) der Führungsring (58) derart radial elastisch aufweitbar ist, dass er unter radial elastischer Aufweitung und anschließender Rückfederung
d) mit einem Lagerabschnitt (84) in eine radial äußere Ausnehmung (86) am Kolbenhemd (50) des Federspeicherbremskolbens (8) eingreift und
e) mit einem die zum Dichtungsabschnitt (60) des Dichtungselements (62) weisende Stirnfläche (72) beinhaltenden Halteabschnitt (88) wenigstens den Vorsprung (78) des Kolbenhemds axial übergreifend und in die Ausnehmung (82) des Lagerabschnitts (84) des Dichtungselements (62) radial eingreifend das Dichtungselement (62) am Kolbenhemd (50) des Federspeicherbremskolbens (8) hält.

5. Federspeicherbremszylinder nach einem der vorhergehenden Ansprüche, **dadurch gekennzeichnet, dass** der Führungsring (58) aus einem Kunststoff wie aus Acetal und das Dichtungselement (62) aus einem Elastomer besteht.

6. Federspeicherbremszylinder nach einem der vorhergehenden Ansprüche, **dadurch gekennzeichnet, dass** der Dichtungsabschnitt (60) des Dichtungselements (62) an seinem vom Führungsring (58) weg weisenden Ende einen schwalbenschwanzförmigen Querschnitt mit zwei Schenkeln (64, 66) aufweist, wobei der eine Schenkel (64) gegen den Federspeicherbremszylinder (4) und der andere Schenkel (66) gegen den Federspeicherbremskolben (8) dichtet.

7. Federspeicherbremszylinder nach einem der vorhergehenden Ansprüche, **dadurch gekennzeichnet, dass** er mit einem Betriebsbremszylinder (2) zu einem kombinierten Betriebsbrems- und Federspeicherbremszylinder (1) zusammengefasst ist und der Betriebsbremszylinder (2) einen im Gehäuse des Betriebsbremszylinders (2) angeordneten Betriebsbremskolben (26) aufweist.

## Claims

1. A spring accumulator brake cylinder (1) for brake systems of vehicles, having a spring accumulator brake piston (8) which is arranged in the housing of the spring accumulator brake cylinder (4) and can be actuated by at least one accumulator spring (10), the spring accumulator brake piston (8) carrying a sealing arrangement (52) on its radially outer circumferential face, for sealing a spring chamber (14) which contains the accumulator spring (10) with respect to a spring accumulator brake chamber (12) of the spring accumulator brake cylinder (4), which spring accumulator brake chamber (12) can be ventilated and bled, and the sealing arrangement (52) comprises a guide ring (58), which guides the spring accumulator brake piston (8) with respect to a running face (54) of the spring accumulator brake cylinder (4) with its radially outer working face (56), and at least one sealing element (62) which seals with its sealing section (60) against the running face (54) of the spring accumulator brake cylinder (4), the working face (56) of the guide ring (58) being arranged in front of the sealing section (60) of the sealing element (62) as viewed in the flow direction from the spring chamber (14) into the spring accumulator brake chamber (12), and the guide ring (58) being composed of a more rigid material than the material of the at least one sealing element (62), **characterised in that** the guide ring (58) is provided on its radially outer working face (56) with at least one radially outer recess (74) which extends in the axial direction and provides a flow connection between the end face (68) of the guide ring (58) which points toward the spring chamber (14) and the end face (72) of the guide ring (58) which points toward the sealing section (60) of the sealing element (62).

2. Spring accumulator brake cylinder according to claim 1, **characterised in that**, furthermore, the guide ring (58) has at least one cavity (76) for receiving lubricant on its radially outer working face (56).

3. Spring accumulator brake cylinder according to one of the preceding claims, **characterised in that** a plurality of recesses (74) and a plurality of cavities (76) are arranged on the radially outer working face (56) of the guide ring (58) in such a way that they are distributed substantially uniformly and alternate.

4. Spring accumulator brake cylinder according to one of the preceding claim, **characterised in that**
a) the radially outer circumferential face of the piston skirt (50) of the spring accumulator brake piston (8) has an at least partially circumferential projection (78),
b) the sealing element (62) has a radially outer, at least partially circumferential recess (82) on a bearing section (80) which is arranged in front of the sealing section (60) in the flow direction from the spring chamber (14) into the spring accumulator brake chamber (12),
c) the guide ring (58) can be elastically widened radially in such a way that, with radially elastic widening and subsequent elastic recovery, it
d) engages with one bearing section (84) into a radially outer recess (86) on the piston skirt (50) of the spring accumulator brake piston (8), and
e) holds the sealing element (62) on the piston skirt (50) of the spring accumulator brake piston (8) with a holding section (88), which contains the end face (72) which points toward the sealing section (60) of the sealing element (62), reaching axially over at least the projection (78) of the piston skirt and engaging radially into the recess (82) of the bearing section (84) of the sealing element (62).

5. Spring accumulator brake cylinder according to one of the preceding claims, **characterised in that** the guide ring (58) is composed of a plastic, such as of acetal, and the sealing element (62) is composed of an elastomer.

6. Spring accumulator brake cylinder according to one of the preceding claims, **characterised in that**, at its end which points away from the guide ring (58), the sealing section (60) of the sealing element (62) has a dovetail-shaped cross-section with two limbs (64, 66), one limb (64) sealing against the spring accumulator brake cylinder (4) and the other limb (66) sealing against the spring accumulator brake piston (8).

7. Spring accumulator brake cylinder according to one of the preceding claims, **characterised in that** it is combined with a service brake cylinder (2) to form a combined service brake and spring accumulator brake cylinder (1), and the service brake cylinder (2) has a service brake piston (26) which is arranged in the housing of the service brake cylinder.

## Revendications

1. Cylindre (1) de frein à ressort accumulateur pour des systèmes de freinage de véhicules, comportant un piston (8) de frein à ressort accumulateur disposé dans le boîtier du cylindre (4) de frein à ressort accumulateur et pouvant être activé par au moins un ressort (10) accumulateur, dans lequel le piston (8) de frein à ressort accumulateur porte à sa surface périphérique extérieure radialement un dispositif (52) d'étanchéité, pour rendre étanche une chambre (14) de ressort contenant le ressort (10) accumulateur par rapport à une chambre (12) de frein à ressort accumulateur du cylindre (4) de frein à ressort accumulateur pouvant être alimentée en air et purgée et le dispositif (52) d'étanchéité comporte un anneau (58) de guidage guidant par sa surface (56) de travail extérieure radialement le piston (8) de frein à ressort accumulateur par rapport à une surface de roulement (54) du cylindre (4) de frein à ressort accumulateur et au moins un élément (62) d'étanchéité assurant l'étanchéité par son segment (60) d'étanchéité sur la surface (54) de roulement du cylindre (4) de frein à ressort accumulateur ; la surface (56) de travail de l'anneau (58) de guidage étant disposée avant le segment (60) d'étanchéité, considéré dans le sens du courant allant de la chambre (12) de frein à ressort accumulateur à la chambre (14) de ressort et l'anneau (58) de guidage est réalisé en un matériau plus rigide que le matériau du au moins un élément (62) d'étanchéité, **caractérisé en ce que** l'anneau (58) de guidage est muni à sa surface (56) de travail extérieure radialement d'au moins un évidement (74) extérieur radialement réalisant une liaison d'écoulement entre la surface (68) avant de l'anneau (58) de guidage, tournée vers la chambre (14) de ressort, et la surface (72) avant de l'anneau (58) de guidage, tournée vers le segment (60) d'étanchéité de l'élément (62) d'étanchéité, l'évidement (74) s'étendant en direction axiale.

2. Cylindre de frein à ressort accumulateur suivant la revendication 1, **caractérisé en ce que** l'anneau (58) de guidage comporte à sa surface (56) de travail extérieure radialement en outre au moins une cavité (76) pour la réception d'un lubrifiant.

3. Cylindre de frein à ressort accumulateur suivant l'une des revendications précédentes, **caractérisé en ce que** plusieurs évidements (74) et plusieurs cavités (76) sont disposés en alternance à la surface (56) de travail extérieure radialement de l'anneau (58) de guidage en étant répartis sensiblement uniformément.

4. Cylindre de frein à ressort accumulateur suivant l'une des revendications précédentes, **caractérisé en ce que**
a) la surface périphérique extérieure radialement de la chemise (50) du piston (8) de frein à ressort accumulateur comporte une saillie (78) faisant le tour au moins en partie,
b) l'élément (62) d'étanchéité comporte, sur une section (80) de palier disposée avant le segment (60) d'étanchéité, dans le sens du courant allant de la chambre (14) de ressort à la chambre (12) de frein à ressort accumulateur, un évidement (82) extérieur radialement faisant au moins en partie le tour,
c) l'anneau (58) de guidage peut être élargi radialement élastiquement de telle sorte que, lorsqu'il est élargi élastiquement radialement et mis sous tension de rappel,
d) il pénètre par un tronçon (84) de palier dans un évidement (86) extérieur radialement sur la chemise (50) du piston (8) de frein à ressort accumulateur, et
e) par une section (88) de maintien contenue dans une surface (72) frontale, tournée vers le segment (60) d'étanchéité de l'élément (62) d'étanchéité, maintient en enjambant axialement au moins la saillie (78) de la chemise de piston et, en pénétrant radialement dans l'évidement (82) de la section (84) de palier de l'élément (62) d'étanchéité, l'élément (62) d'étanchéité à la chemise (50) du piston (8) de frein à ressort accumulateur.

5. Cylindre de frein à ressort accumulateur suivant l'une des revendications précédentes, **caractérisé en ce que** l'anneau (58) de guidage est en une matière plastique, telle qu'en acétal, et l'élément (62) d'étanchéité est en un élastomère.

6. Cylindre de frein à ressort accumulateur suivant l'une des revendications précédentes, **caractérisé en ce que** le segment (60) d'étanchéité de l'élément (62) d'étanchéité a, à son extrémité éloignée de l'anneau (58) de guidage, une section transversale en forme de queue d'aronde comportant deux branches (64, 66), l'une des branches (64) portant de manière étanche contre le cylindre (4) de frein à ressort accumulateur et l'autre branche (66) portant de manière étanche contre le piston (8) de frein à ressort accumulateur.

7. Cylindre de frein à ressort accumulateur suivant l'une des revendications précédentes, **caractérisé en ce qu'**il est assemblé à un cylindre (2) de frein de service en un cylindre (1) combiné de frein à ressort accumulateur et de service et le cylindre (2) de service comporte un piston (26) de frein de service disposé dans le carter du cylindre (2) de frein de service.
